# EUROPEAN PATENT APPLICATION

(11) **EP 4 779 839 A1**
(43) Date of publication of application: **22.07.2026**
(21) Application number: 24902526.3
(22) Date of filing: 22.11.2024
(51) Int. Cl.: H02J 7/00

(54) **CHARGER**

(30) Priority: 15.12.2023 CN 202311736531
(71) Applicant: Nanjing Chervon Industry Co., Ltd., Nanjing, Jiangsu 211106 (CN)
(72) Inventor: YUAN, Yuan, Nanjing, Jiangsu 211106 (CN); GENG, Zheng, Nanjing, Jiangsu 211106 (CN); SHEN, Xiangmin, Nanjing, Jiangsu 211106 (CN); ZHANG, Yuexiang, Nanjing, Jiangsu 211106 (CN)
(74) Representative: Sun, Yiming
(86) International application number: PCT/CN2024/133778
(87) International publication number: WO 2025/124104

(57) **Abstract**

A charger includes: a housing; multiple power terminals supported by the housing and multiple power lines electrically connected to the multiple power terminals, where each of the multiple power lines is configured to power a charging link; a charging circuit including multiple charging paths, where at least one of the multiple power terminals is connectable to at least two of the multiple charging paths; and a controller connected to at least the charging circuit and the multiple power terminals. The controller is configured to control an output power of each of the multiple power terminals according to at least electrical parameters at the multiple power terminals.

## Description

This application claims priority to Chinese Patent Application No. 202311736531.2 filed with the China National Intellectual Property Administration (CNIPA) on Dec. 15, 2023, the disclosure of which is incorporated herein by reference in its entirety.

### TECHNICAL FIELD

The present application relates to a high-power power supply apparatus, for example, a charger.

### BACKGROUND

With the development of battery technology, portable power tools have gradually become mainstream tools. Different tools may use different battery packs as power sources. When a family or a team has various power tools, the family or the team may have multiple identical or different battery packs. Current chargers, especially high-power chargers that can directly charge vehicles such as riding mowers, have only one output interface. Only battery packs on one charging link can be charged through the output interface, and battery packs of different tools cannot be charged at the same time. A user needs to manually switch battery packs. Therefore, a charger that can charge battery packs on multiple links at the same time has become one of the mainstream products developed in the charger field.

This part provides background information related to the present application, and the background information is not necessarily the existing art.

### SUMMARY

An objective of the present application is to solve or at least alleviate part or all of the preceding problems. To this end, an objective of the present application is to provide a high-power multi-terminal charger that charges multiple charging links and can allocate charging powers to different charging links.

To achieve the preceding objective, the present application adopts the technical solutions described below.

A charger includes: a housing; multiple power terminals supported by the housing and multiple power lines electrically connected to the multiple power terminals, where each of the multiple power lines is configured to power a charging link; a charging circuit including multiple charging paths, where at least one of the multiple power terminals is connectable to at least two of the multiple charging paths; and a controller connected to at least the charging circuit and the multiple power terminals. The controller is configured to control an output power of each of the multiple power terminals according to at least electrical parameters at the multiple power terminals.

In an example, a maximum output power of at least one of the multiple power lines is less than or equal to 4000 W.

In an example, at least one of the multiple power lines is fixedly connected to a power terminal.

In an example, at least one of the multiple power lines is connected to a power terminal in a pluggable manner.

In an example, power output terminals of at least two of the multiple power lines are in different port forms.

In an example, a port of a power output terminal of at least one of the multiple power lines is a charging gun to adapt to a charging interface of a vehicle.

In an example, the charging link includes one or more of a battery pack for a power tool, a power supply apparatus, and a vehicle.

In an example, a switching element is connected in series to each of the multiple charging paths, and the controller is configured to be capable of controlling a switching state of the switching element according to the electrical parameters, so as to change an output power of each of the multiple charging paths.

In an example, the electrical parameters include at least one of a voltage, a current, or an output power.

A charger includes: a housing; multiple power terminals supported by the housing and multiple power lines electrically connected to the multiple power terminals, where each of the multiple power lines is configured to power a charging link; and a charging circuit including multiple charging paths. A maximum output power of the charger is less than or equal to 4000 W.

A charger includes: a housing; multiple power terminals supported by the housing and multiple power lines electrically connected to the multiple power terminals, where each of the multiple power lines is configured to power a charging link, the multiple power terminals include at least a primary power terminal, and a maximum output power of the primary power terminal is less than or equal to 4000 W; and a controller connected to at least a charging circuit and the multiple power terminals. The controller is configured to control an output power of each of the multiple power terminals according to at least an electrical parameter at the primary power terminal.

In an example, the controller is configured to, in the case where the electrical parameter at the primary power terminal is within a first parameter range, control the primary power terminal to output a power and control other power terminals except the primary power terminal to stop outputting powers.

In an example, the controller is configured to, in the case where the electrical parameter at the primary power terminal is within a second parameter range, adjust an output power of the primary power terminal and adjust power outputs of the other power terminals according to electrical parameters at the other power terminals except the primary power terminal.

In an example, the controller is configured to, in the case where the electrical parameter at the primary power terminal is within a third parameter range, cause the primary power terminal to stop outputting the power.

### BRIEF DESCRIPTION OF DRAWINGS

FIG. 1 is a structural view of a charging system according to an example of the present application.
FIG. 2 is a schematic diagram of a circuit of a charging system according to an example of the present application.
FIG. 3 is a schematic diagram of a circuit structure of a charger according to an example of the present application.
FIG. 4 is a schematic diagram of a circuit structure of a charger according to an example of the present application.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

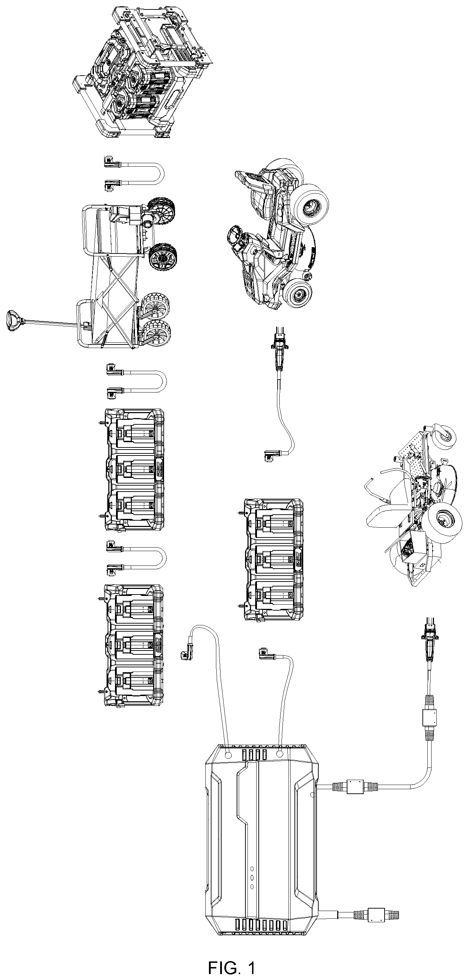

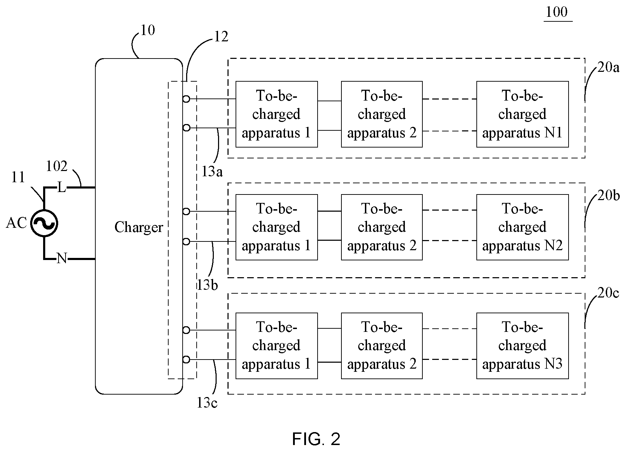

A charging system 100 shown in FIGS. 1 and 2 may include a charger 10 and multiple charging links 20. In this example, a charging interface 11 of the charger 10 is configured to be connected to a charging power supply, such as utility power, to obtain charging electrical energy. The charging interface 11 may be a power interface that is formed or mounted on a housing 101 and is led out by a charging line 102. Multiple power terminals 12 are also formed, carried, or supported on the housing 101 of the charger 10. The multiple power terminals 12 are connected to multiple charging links 20 through multiple power lines 13. A power input terminal 131 of a power line 13 is connected to a power terminal 12 of the charger 10, and a power output port 132 of the power line 13 is connected to a charging link 20. In other examples, the charger 10 may further include a battery charging terminal that can be directly connected to a battery pack without use of the power line 13. Positions of the multiple power terminals 12 on the housing 101 are as shown in FIG. 1. The multiple power terminals 12 may be located at a lower end of the housing 101 or a side surface of the housing 101, may be located on a back of the housing 101 or a top of the housing 101, or may be close to a position where the charging line 102 is led out. The present application does not specifically limit the positions of the multiple power terminals 12 on the charger 10.

In an example, the power input terminal 131 of the power line 13 can be fixedly mounted to the power terminal 12 of the charger 10, that is, the power line 13 is fixed on the charger 10. In an example, the power line 13 is mounted to the charger 10 in a pluggable manner, that is, the power input terminal 131 can be mounted to the power terminal 12 in a pluggable manner.

In this example, the charging link 20 may include at least one of a battery pack 21 for a power tool, a power supply apparatus 22, or a vehicle 23. That is to say, the charging link 20 may include a to-be-charged apparatus or may be a link in which multiple to-be-charged apparatuses are cascaded.

In an example, the power supply apparatus 22 may be an adapter that is connectable to at least one battery pack 21 and can convert electrical energy outputted by the charger 10 to charge the battery pack 21. An input terminal of the adapter is connected to the power output port 132, and an output terminal of the adapter is inserted into the battery pack for the power tool.

In an example, the power supply apparatus 22 may be a battery compartment that can accommodate the at least one battery pack 21 and can convert the electrical energy outputted by the charger 10 to charge the battery pack 21. Alternatively, the power supply apparatus 22 may be a movable cart with a battery compartment. An input terminal of the battery compartment may be connected to the power output port 132, and a battery connection terminal in the battery compartment is inserted into the battery pack.

In an example, the power supply apparatus 22 may be a direct current-direct current (DC-DC) apparatus that is connectable to different types of battery packs 21 and can convert the electrical energy outputted by the charger 10 to charge at least part of the battery packs. Alternatively, the power supply apparatus 22 may be a DC-DC apparatus that can use the electrical energy outputted by the charger 10 to charge part of the battery packs and can use the charged battery packs to charge other uncharged battery packs. In other examples, the charging link 20 may further include another type of energy storage apparatus that can be charged or a power tool or an electric device in which an energy storage apparatus is built, mounted, or inserted.

In this example, the to-be-charged apparatus in the charging link 20 may include the energy storage apparatus, such as the battery pack 21. In an example, an apparatus for carrying or mounting the to-be-charged apparatus may also be referred to as a to-be-charged apparatus, such as the power supply apparatus 22 or the vehicle 23 described in the present application.

In an example, a power tool may also be included in the charging link 20. In an example, the battery pack 21 in the charging link 20 or a battery pack mounted on the power supply apparatus 22 may power multiple types of power tools. A power tool related to the present application may be a handheld power tool, for example, a drill, a pruner, or a sander. Alternatively, the power tool may be a table tool, for example, a table saw or a miter saw. Alternatively, the power tool may be a push power tool, for example, a push mower or a push snow thrower. Alternatively, the power tool may be a riding power tool, for example, a riding mower, a riding vehicle, or an all-terrain vehicle. Alternatively, the power tool may be a robotic tool, for example, a robotic mower or a robotic snow thrower. In some examples, the power tool may be an electric drill, an electric light, an electric vehicle, or the like. In some examples, the power tool may be a garden tool, for example, a pruner, a blower, a mower, or a chain saw. Alternatively, the power tool may be a decoration tool, for example, a screwdriver, a nail gun, a circular saw, or a sander. In some examples, the power tool may be a vegetation maintenance tool, for example, a string trimmer, a mower, a pruner, or a chain saw. Alternatively, the power tool may be a cleaning tool, for example, a blower, a snow thrower, or a washer. Alternatively, the power tool may be a drilling tool, for example, a drill, a screwdriver, a wrench, or an electric hammer. Alternatively, the power tool may be a sawing tool, for example, a reciprocating saw, a jigsaw, or a circular saw. Alternatively, the power tool may be a table tool, for example, a table saw, a miter saw, a metal cutter, or an electric router. Alternatively, the power tool may be a sanding tool, for example, an angle grinder or a sander. Alternatively, the power tool may be another tool, for example, a light or a fan. Of course, the load may include another type of household appliance.

In this example, the vehicle 23 in the charging link 20 may be a riding mower, a riding snow thrower, an all-terrain vehicle (ATV), a utility task vehicle (UTV), or another large tool or device. Alternatively, the vehicle 23 in the charging link 20 may be a large push garden tool, for example, a push mower or a push snow thrower. When multiple power supply apparatuses 22 or vehicles are cascaded in the charging link 20, a connection line 30 may be used for connection. The connection line 30 may be the same as or different from the power line 13 mentioned above. In the charging system 100 shown in FIG. 1, the charger 10 has three power terminals 12a to 12c. The three power terminals 12a to 12c are connectable to three power lines 13a to 13c, and each power line 13 is connectable to a charging link 20. A charging link 20a connected to a power line 13a is cascaded with multiple power supply apparatuses 22, specifically including an adapter 221, a battery compartment 222, and a DC-DC apparatus 223. A connection line 30 is electrically connected to each power supply apparatus 22. A charging link 20b connected to a power line 13b is cascaded with an adapter 221 and a vehicle 23, and the adapter 221 and the vehicle 23 are connected to each other through a connection line 30. A charging link 20c connected to a power line 13c is connected to a vehicle 23. It is to be noted that connection lines 30 in different charging links 20 may be different, or multiple connection lines 30 in the same charging link 20 may be different, or connection lines in different charging links 20 may be used in a mixed manner. For example, one end of the connection line 30 is connectable to the adapter 221, and the other end of the connection line 30 is connectable to the battery compartment 222. This connection line may be used in the case where the output terminal of the adapter 221 in the charging link 20 is connected to the battery compartment 222.

In this example, power output ports 132 of at least two power lines 13 are in different port forms, and each of the port forms may include the shape, size, and the like of a port. For example, some power output ports 132 are circular ports, and some power output ports 132 are square ports or ports in other shapes. Different forms of ports are connectable to different objects. In the present application, a power line 13 with a square port is directly connectable to the vehicle 23 to charge the vehicle 23 or a battery pack in the vehicle 23, and a power line 13 with a circular port is connectable to the adapter 221 or the battery compartment 222 or the DC-DC apparatus 223. In this example, an output port of at least one power line 13 is a square port, and the square power output port 132 may also be referred to as a charging gun that is adaptable to a charging port of the vehicle 23.

In an example, a maximum output power of the charger 10 is less than or equal to 4000 W, or less than or equal to 3500 W, or less than or equal to 3200 W, or less than or equal to 3000 W, or the like. In an example, a maximum output power of at least one power line 13 or a maximum output power of at least one power terminal 12 is less than or equal to 3500 W. The power terminal 12 with the maximum output power of less than or equal to 3500 W is defined as a primary power terminal, and a charging link 20 connected to the power terminal is a primary charging link 201. The primary charging link 20 may be understood as a link capable of obtaining the maximum output power of the charger 10. Generally, the primary charging link 201 is connected to a power supply apparatus 22 or a vehicle 23 or a battery pack 21 that requires a relatively high charging power. In the present application, the primary charging link 20 is configured to include at least the vehicle 23.

In an example, whether the charging link 20 connected to the power output port 132 is the primary charging link 201 may be determined according to a port form of the power output port 132. For example, the charging link 20 connectable to the square power output port 132 of the vehicle 23 is the primary charging link 201.

In this example, when the primary charging link 201 is connected to the to-be-charged apparatus, such as the vehicle 23, the charging circuit in the charger 10 preferentially powers the primary charging link 201 connected to the primary power terminal 12 and can charge the to-be-charged apparatus in the primary charging link 201, such as the vehicle 23, with the maximum charging power. When the primary charging link 201 is charged to a certain degree, the charging circuit may power other charging links 20 in the case where the charging circuit reduces the charging power to power the primary charging link 201. When the primary charging link 201 is fully charged substantially, a charging path that outputs electrical energy to the primary charging link 201 may be turned off, and a charging power may be allocated to the other charging links 20 according to the electrical parameters on the other charging links 20. Thus, while ensuring that the charger 20 can operate with the maximum output power, waste of resources can also be avoided.

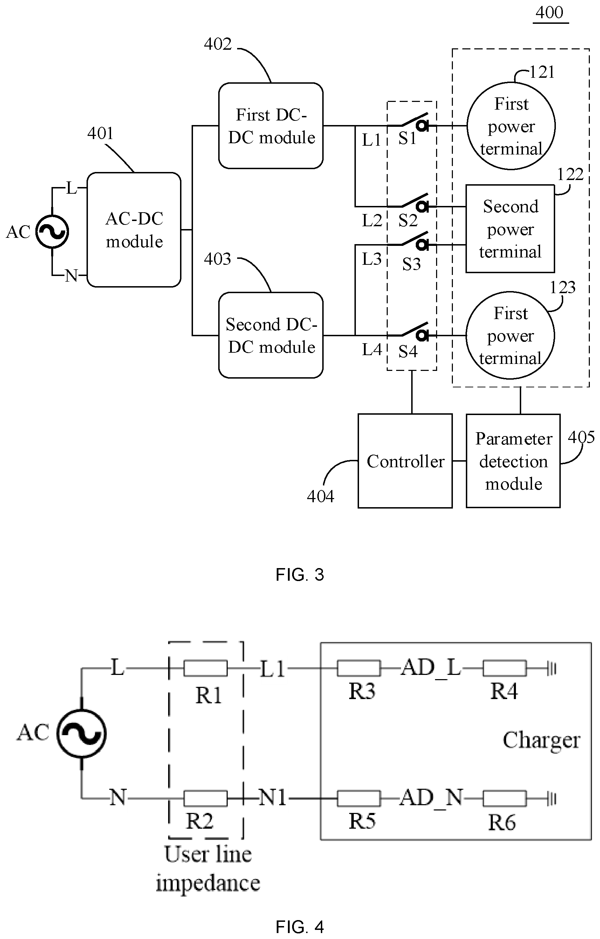

In an example, the charger 10 with the three power terminals 12 is used as an example. A charging circuit 400 of the charger 10 shown in FIG. 3 may include an alternating current-direct current (AC-DC) module 401, a first DC-DC module 402, a second DC-DC module 403, multiple charging paths L1 to L4 led out by the first DC-DC module 402 and the second DC-DC module 403, switching elements S1 to S4 connected in series on the charging paths L1 to L4, respectively, and a controller 404 that can at least control switching states of the switching elements S1 to S4. The power terminals 12 include a first power terminal 121, a second power terminal 122, and a third power terminal 123. Each power terminal is connected to at least one charging path so that the charging electrical energy can pass through, along the corresponding charging path, the power terminal 12 and the power line 13 electrically coupled to the power terminal 12 to charge the to-be-charged apparatus in the charging link 20 connected to the power terminal 12. In this example, charging powers outputted from the charging paths L1 and L2 are substantially the same, and charging powers outputted from the charging paths L3 and L4 are substantially the same. In this example, the controller 404 may control operating states of power elements in the AC-DC module 401, the first DC-DC module 402, and the second DC-DC module 403, so as to adjust magnitudes of output powers of different charging paths. It is to be understood that the controller 404 may also control the switching states of the switching elements S1 to S4 to control the charging paths to be capable of outputting the charging powers or not. The preceding configuration may also be understood as follows: the controller 404 can control the switching states of the switching elements S1 to S4 to control the output powers of the charging paths. It is to be noted that the AC-DC module 401 may be a power factor correction (PFC) power module, and accordingly, the first DC-DC module 402 and the second DC-DC module 403 may be isolated power modules. In the present application, the PFC module and the isolated power modules may be implemented by using mature circuit modules. In addition, a process where the controller 404 changes the output powers through the PFC module and/or the isolated power modules is also a relatively common control mode, which is not described in detail.

In this example, the charging circuit 400 may further include a parameter detection module 405. The parameter detection module 405 can at least detect electrical parameters at the power terminals 12, which may include current parameters, voltage parameters, power parameters, or the like. In addition, the parameter detection module 405 may transmit the detected electrical parameters to the controller 404 so that the controller 404 can at least control the output powers of the charging paths according to the acquired electrical parameters. In an implementation, as shown in FIG. 3, the charging circuit 400 may include multiple parameter detection modules 405, and each parameter detection module 405 can correspondingly detect an electrical parameter at one power terminal 12. In an implementation, the number of parameter detection modules 405 is less than or equal to the number of power terminals 12, or at least two power terminals 12 can share one parameter detection module 405. In an implementation, at least one parameter detection module 405 is disposed in the charging circuit 400 to be capable of detecting the electrical parameters at all the power terminals 12. It is to be understood that the parameter detection module 405 may also acquire identification information that can represent an identity of each power terminal 12, or the parameter detection module 405 can acquire identification information that represents an identity of the to-be-charged apparatus in the charging link 20. The preceding two types of identification information are collectively referred to as identification information here. The parameter detection module 405 may send the identification information to the controller 404 so that the controller 404 can confirm the identity of each power terminal 12 and the identity of the to-be-charged apparatus in the charging link 20 connected to the power terminal 12. The identification information may include identification information indicating whether the power terminal 12 is the primary power terminal or may include a type and a model of the to-be-charged apparatus in the charging link 20.

It is to be understood that the electrical parameter at the power terminal 12 may represent a state of the power supply apparatus in the charging link 20 connected to the power terminal 12, such as whether the power supply apparatus is being charged and a magnitude of a current or a voltage at which the power supply apparatus is being charged. Thus, the controller 404 may control the switching states of the switching elements in the charging paths according to the acquired electrical parameter and/or the acquired identification information, so as to control the corresponding charging paths to be turned on or off. In addition, the controller 404 may control the power elements in the AC-DC module 401, the first DC-DC module 402, and the second DC-DC module 403, so as to change a charging power outputted by a turned-on charging path.

In this example, at least one power terminal 12 is connectable to at least two charging paths, and this power terminal may be defined as the primary power terminal. In the charging circuit 400 shown in FIG. 3, the second power terminal 122 may be connected to a second charging path L2 and a third charging path L3, the first power terminal 121 is electrically connected to a first charging path L1, and the third power terminal 123 is electrically connected to a fourth charging path L4. Thus, the second power terminal 122 may be used as the primary power terminal, and a link connected to the second power terminal 122 for charging may be used as the primary charging link 201. Thus, the primary charging link 20 that is charged through the primary power terminal 122 can be charged with the maximum output power of the charger 10.

It is to be understood that the charger 10 may be provided with multiple primary power terminals, and the to-be-charged apparatus included in the primary charging link connected to the primary power terminal may be determined by the user, which is not limited in the present application.

With continued reference to FIG. 3, the controller 404 may control an output power of each power terminal 12 of the charger 10 according to an electrical parameter at the primary power terminal 122. For example, the controller 404 may acquire a magnitude of a discharging current and/or a discharging voltage at the primary power terminal 122. Then, the controller 404 may determine whether the battery pack in the vehicle 23 connected to the primary power terminal 122 is fully charged, or a charging process of the battery pack, that is, a charging degree, a current electric quantity, or the like of the battery pack.

In this example, the controller 404 may control, in the case where the electrical parameter at the primary power terminal 122 is within a first parameter range, the primary power terminal 122 to output a power and control other power terminals 12 except the primary power terminal to stop outputting powers. That is, when the primary charging link 20 requires fast charging or high-power charging, charging of the primary charging link 20 is preferentially ensured so that the charger 10 operates with the maximum output power. The controller 404 may further adjust, in the case where the electrical parameter at the primary power terminal 122 is within a second parameter range, an output power of the primary power terminal 122 and adjust power outputs of the other power terminals according to electrical parameters at the other power terminals except the primary power terminal 122. For example, the output power of the primary power terminal 122 is reduced, and at least one of the other power terminals is changed from outputting no power to outputting a charging power. The controller 404 may further cause, in the case where the electrical parameter at the primary power terminal 122 is within a third parameter range, the primary power terminal 122 to stop outputting the power, and may control more of the other power terminals to change from outputting no power to outputting the charging power. Each of the first parameter range, the second parameter range, and the third parameter range may be a parameter value or a parameter section, and parameters therein may be current parameters, electric quantity parameters, voltage parameters, or a combination of multiple parameters. In this example, the electrical parameter at the power terminal 12 can represent a charging state of the to-be-charged apparatus in the charging link 20 connected to the power terminal, such as whether the to-be-charged apparatus is being charged, or a charging degree of the to-be-charged apparatus, such as a percentage of a charged electric quantity relative to a full electric quantity.

In an example, the controller 404 may control, in the case where the electrical parameter at the primary power terminal 122 is within the first parameter range, a power supply path connected to the primary power terminal 122 to be turned on so that the primary power terminal 122 can continuously output the charging power. In addition, the controller 404 may turn off other power supply paths that are not connected to the primary power terminal 122 so that the other power terminals do not output the power temporarily. For example, in the case wherein an electric quantity of the to-be-charged apparatus in the primary charging link 20 is very low, the charger 10 may output the maximum charging power through the primary power terminal 122 to power the primary charging link 20. In the case where the electrical parameter at the primary power terminal 122 is within the second parameter range, and the to-be-charged apparatus in the primary charging link 20 is charged to a certain degree, the power output of the charger 10 to the primary charging link may be reduced, while one or more of the other charging links are allowed to output the power. For example, when the electric quantity of the to-be-charged apparatus in the primary charging link 20 reaches any degree between 50% and 90% of the full electric quantity, the charging power of the primary charging link 20 may be reduced. In the case where the electrical parameter at the primary power terminal 122 is within the third parameter range, the to-be-charged apparatus in the primary charging link 20 is fully charged substantially. The power output of the charger 10 to the primary charging link may be stopped, and output powers may be allocated to different power terminals according to the parameters at the other power terminals.

The electrical parameter at the primary power terminal 122 may be on different orders of magnitude when different to-be-charged apparatuses are charged in the primary charging link 20. Therefore, the present application does not specifically limit a range of the electrical parameter. When the electrical parameter at the primary power terminal 122 is within the first parameter range, it is indicated that the to-be-charged apparatus in the primary charging link 20 has a very small electric quantity and requires the high-power charging. When the electrical parameter at the primary power terminal 122 is within the second parameter range, it can be indicated that the to-be-charged apparatus in the primary charging link 20 can be fully charged quickly even without the high-power charging. When the electrical parameter at the primary power terminal 122 is within the third parameter range, it can be indicated that the to-be-charged apparatus in the primary charging link 20 is fully charged substantially and does not need to be further charged.

In an example, the controller 404 evaluates a charging state of the primary charging link 20 based on a magnitude of a charging current at the power terminal 12. For example, in the case where a voltage at the primary power terminal 122 is relatively high and the outputted charging current is greater than a first current threshold, the controller 404 determines that the primary charging link 20 requires the high-power charging. The controller 404 may control the primary power terminal 122 to continuously output the electrical energy for powering with a high power, while the other power terminals stop outputting the powers. In the case where the charging current at the primary power terminal 122 is greater than a second current threshold and less than or equal to the first current threshold, it may be determined that a charged electric quantity of the to-be-charged apparatus in the primary charging link 20 has reached a certain degree. The power output at the primary power terminal 122 may be adjusted, such as reduction of the output power. In addition, the charging powers of the charger 10 to the other charging links may be adjusted according to the electrical parameters at the other power terminals 12. In the case where the charging current at the primary power terminal 122 is less than or equal to the second current threshold, it may be considered that the to-be-charged apparatus in the primary charging link 20 is fully charged substantially. The power output of the primary power terminal 122 may be stopped. For example, all the power supply paths L2 and L3 connected to the primary power terminal 122 are turned off, that is, the switches S2 and S3 are turned off. In other examples, the controller 404 may acquire an electric quantity parameter of a to-be-charged apparatus in a charging link 20 connected to each power terminal. In addition, the controller 404 may determine, according to a relationship between the electric quantity parameter and an electric quantity threshold, whether each charging link, especially the primary charging link, is fully charged or a charging degree thereof. In this example, the first current threshold is greater than the second current threshold, and the second current threshold is substantially zero.

In some examples, the charger 10 may include at least two primary power terminals (not shown). In the case where the at least two primary power terminals are each connected to the primary charging link 20, the controller 404 may allocate, according to electrical parameters at the at least two primary power terminals, the maximum charging power to at least two primary charging links when a to-be-charged apparatus in any primary charging link requires the high-power charging, so as to cause the other power terminals to stop outputting the charging powers. In addition, after all the primary charging links are fully charged substantially, power outputs of all the primary charging links may be stopped, and the charging powers may be allocated to the other charging links. Alternatively, after all the primary charging links are charged to a certain degree, the charging powers of all the primary charging links may be reduced, and the charging powers may be allocated to the other charging links. It is to be understood that a control mode of the charger 10 to allocate the charging powers to the primary charging links and the other charging links may be different depending on the number of primary power terminals, but the high-power charging of the primary charging links is at least ensured, and the output powers of the charger for charging all the charging links are at least not wasted.

Since the charger 10 is connectable to the multiple charging links, a user may charge all or as many apparatuses in the home as possible in a long period of time. For example, while the vehicle 23 is charged at night, it can also be ensured that the power supply apparatus 22 connected to another charging link can be charged, which greatly meets the user's charging needs.

It is to be noted that the charger 10 may be used as a type of household electrical device. Therefore, the high-power charger 10 is also limited by a current withstanding capability of a household power supply line of the user. The following configuration aims to avoid the case where the charger exceeds the current withstanding capability of the user line when operating with a full power, thereby damaging the user line and causing safety accidents. To solve this problem, an operating current of the charger 10 may be reduced to a level below a current withstanding capability of a general household line. This method can avoid damaging the user line, but it also causes the charger 10 to fail to operate with the full power, thereby failing to meet the needs of other professional users for high-power chargers.

To meet the current withstanding capability of the household user line and enable the charging power of the charger to be fully utilized, the controller or the control module in the charger may detect whether a charging power of a current charging link causes excessive heating in the line. If the charging power of the current charging link causes the excessive heating in the line, the controller or the control module reduces the charging power of the charging link which is being charged with the high power.

In an example, at least one voltage divider resistor may be disposed in the charging circuit 400. For example, as shown in FIG. 4, a voltage divider circuit formed by R3 and R4 or a voltage divider circuit formed by R5 and R6 is provided. R1 and R2 represent impedance on virtual household user lines L and N. It is to be understood that when the charger 10 operates, voltage drops are generated across R1 and R2, causing an AC voltage (L1/N1) entering the charger to be lower than a grid voltage (L/N). The charger 10 may detect a voltage of the line L1 through a voltage divided by the voltage divider resistors R3 and R4 and may detect a voltage of the line N1 through a voltage divided by the voltage divider resistors R5 and R6. If a voltage of the charging link connected to the charger 10 during the high-power charging can meet the needs of the high-power charging, a current in the charging path is not excessive. Accordingly, the voltage of the voltage divider resistor is not excessive. Conversely, if the voltage of the voltage divider resistor is relatively high, the current in the charging path is relatively high, which poses a risk of damaging the user line.

In an implementation, the controller (not shown) in the charging circuit may detect voltage values of AD_L and AD_N when the charger 10 is powered on with no load for the first time. In addition, the controller may detect voltage values of AD_L and AD_N again when the charger 10 performs high-power full-load charging. If deviations between the voltage values detected twice are greater than preset voltage differences, it is determined that the charging link 20 currently performing the full-load charging is not suitable for the high-power charging. Otherwise, it is considered that the charging link 20 currently performing the full-load charging is suitable for the high-power charging. In the case where the controller determines that the charging link is not suitable for charging, the controller may control other modules in the charging circuit to adjust the charging power of the charging link, for example, to reduce the charging power, thereby avoiding damage to the household line.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A charger, comprising:
a housing;
a plurality of power terminals supported by the housing and a plurality of power lines electrically connected to the plurality of power terminals, wherein each of the plurality of power lines is configured to power a charging link;
a charging circuit comprising a plurality of charging paths, wherein at least one of the plurality of power terminals is connectable to at least two of the plurality of charging paths; and
a controller connected to at least the charging circuit and the plurality of power terminals;
wherein the controller is configured to:
control an output power of each of the plurality of power terminals according to at least electrical parameters of the plurality of power terminals.

2. The charger according to claim 1, wherein a maximum output power of at least one of the plurality of power lines is less than or equal to 4000 W.

3. The charger according to claim 1, wherein at least one of the plurality of power lines is fixedly connected to a power terminal of the plurality of power terminals.

4. The charger according to claim 1, wherein at least one of the plurality of power lines is connected to a power terminal of the plurality of power terminals in a pluggable manner.

5. The charger according to claim 1, wherein power output terminals of at least two of the plurality of power lines are in different port forms.

6. The charger according to claim 1, wherein a port of a power output terminal of at least one of the plurality of power lines is a charging gun to adapt to a charging interface of a vehicle.

7. The charger according to claim 1, wherein the charging link comprises one or more of a battery pack for a power tool, a power supply apparatus, or a vehicle.

8. The charger according to claim 1, wherein a switching element is connected in series to each of the plurality of charging paths, and the controller is configured to be capable of controlling a switching state of the switching element according to the electrical parameters, so as to change an output power of each of the plurality of charging paths.

9. The charger according to claim 1, wherein the electrical parameters comprise at least one of a voltage, a current, or an output power.

10. A charger, comprising:
a housing;
a plurality of power terminals supported by the housing and a plurality of power lines electrically connected to the plurality of power terminals, wherein each of the plurality of power lines is configured to power a charging link;
a charging circuit comprising a plurality of charging paths;
wherein a maximum output power of the charger is less than or equal to 4000 W.

11. The charger according to claim 10, wherein a maximum output power of at least one of the plurality of power lines is less than or equal to 4000 W.

12. The charger according to claim 10, wherein at least one of the plurality of power lines is fixedly connected to a power terminal of the plurality of power terminals.

13. The charger according to claim 10, wherein at least one of the plurality of power lines is connected to a power terminal of the plurality of power terminals in a pluggable manner.

14. The charger according to claim 10, wherein power output terminals of at least two of the plurality of power lines are in different port forms.

15. The charger according to claim 10, wherein a port of a power output terminal of at least one of the plurality of power lines is a charging gun to adapt to a charging interface of a vehicle.

16. The charger according to claim 10, wherein the charging link comprises one or more of a battery pack for a power tool, a power supply apparatus, or a vehicle.

17. A charger, comprising:
a housing;
a plurality of power terminals supported by the housing and a plurality of power lines electrically connected to the plurality of power terminals, wherein each of the plurality of power lines is configured to power a charging link;
wherein the plurality of power terminals comprise at least a primary power terminal; and
a maximum output power of the primary power terminal is less than or equal to 4000 W; and
a controller connected to at least a charging circuit and the plurality of power terminals;
wherein the controller is configured to:
control an output power of each of the plurality of power terminals according to at least an electrical parameter at the primary power terminal.

18. The charger according to claim 17, wherein the controller is configured to, in a case where the electrical parameter at the primary power terminal is within a first parameter range, control the primary power terminal to output a power and control other power terminals except the primary power terminal to stop outputting powers.

19. The charger according to claim 18, wherein the controller is configured to, in a case where the electrical parameter at the primary power terminal is within a second parameter range, adjust an output power of the primary power terminal and adjust power outputs of the other power terminals according to electrical parameters at the other power terminals except the primary power terminal.

20. The charger according to claim 19, wherein the controller is configured to, in a case where the electrical parameter at the primary power terminal is within a third parameter range, cause the primary power terminal to stop outputting the power.
